# EUROPÄISCHE PATENTSCHRIFT

(11) **EP 4 453 541 B1**
(45) Veröffentlichungstag und Bekanntmachung des Hinweises auf die Patenterteilung: **30.09.2026**
(21) Anmeldenummer: 23809182.1
(22) Anmeldetag: 17.11.2023
(51) Int. Cl.: G01N 21/25, G01N 21/76

(54) **LUMINOMETER UND VERFAHREN ZUM UNTERSUCHEN VON PROBEN MITTELS LUMINESZENZMESSUNGEN**
LUMINOMETER AND METHOD FOR EXAMINING SAMPLES USING LUMINESCENCE MEASUREMENTS
LUMINOMÈTRE ET PROCÉDÉ D'ANALYSE D'ÉCHANTILLONS PAR MESURES DE LUMINESCENCE

(30) Priorität: 27.12.2022 DE 102022134862
(43) Veröffentlichungstag der Anmeldung: 30.10.2024
(73) Patentinhaber: Byonoy GmbH, 22761 Hamburg (DE)
(72) Erfinder: NAZIRIZADEH, Yousef, 22765 Hamburg (DE); BEHRENDS, Volker, 22307 Hamburg (DE); GARTIG, Sten, 33335 Gütersloh (DE)
(74) Vertreter: Seemann & Partner Patentanwälte mbB
(86) Internationale Anmeldenummer: PCT/EP2023/082211
(87) Internationale Veröffentlichungsnummer: WO 2024/141200

(56) Entgegenhaltungen:
- DE-A1- 102019 128 546
- JP-A- 2004 012 411
- JP-A- 2006 317 151
- US-A1- 2022 050 048
- BYONOY GMBH: "Luminometer und Verfahren zum Untersuchen von Proben mittels Lumineszenzmessungen", vol. 706, no. 1, 28 December 2022 (2022-12-28), XP007150895, ISSN: 0374-4353, Retrieved from the Internet <URL:https://www.researchdisclosure.com/database/RD706001> [retrieved on 20221228]

## Beschreibung

Die Erfindung betrifft einen Luminometer zur Untersuchung von Proben in Kavitäten einer Mikrotiterplatte. Die Erfindung betrifft ferner ein Verfahren zum Untersuchen von Proben in Kavitäten einer Mikrotiterplatte mittels Lumineszenzmessungen.

Heutzutage benutzen Microplate-Luminometer üblicherweise Photomultiplier-Röhren. Aus diesem Grunde sind die bekannten Microplate-Luminometer sehr groß und schwer und benötigen einen Stromanschluss.

EP 3 869 183 A1 offenbart eine Vorrichtung zur nephelometrischen Messung von Proben, die in einer Matrixanordnung in Näpfchen einer Mikrotiterplatte angeordnet sind. Mit dieser Vorrichtung können auch Lumineszenzmessungen in Mikrotiterplatten durchgeführt werden. Als Detektor kann eine Photomultiplier-Röhre oder ein halbleiterbasierter Detektor, wie beispielsweise ein Silizium-Photomultiplier mit einer großen sensitiven Fläche verwendet werden. Der Sensor wird hierbei zum Messen der Proben bewegt. Es werden einzelne Messungen der Proben in den Kavitäten der Mikrotiterplatte vorgenommen.

EP 4 056 990 A1 offenbart ein Verfahren und eine Vorrichtung zur respirometrischen Detektion von Bakterien durch eine lumineszenzbasierte Oxymetrie. Hierzu wird eine Mikrotiterplatte beim Messen an einer Pipettiervorrichtung und einer Sensorlinie vorbei bewegt, wobei hierzu ein Tisch, auf dem die Mikrotiterplatte angeordnet ist, bewegt wird. Es wird zudem eine Anregungslichtquelle verwendet, um eine Leuchtreaktion in den Proben hervorzurufen. Die Sensorlinie hat Anregungsmittel und Messmittel. Die Anregungsmittel sind so ausgestaltet, dass für jede Zelle in einer entsprechenden Reihe eine Lichtquelle, beispielsweise eine LED oder ein Laser, vorgesehen ist. Es soll eine gleichzeitige Messung über die Reihe der Zellen möglich sein.

US 2022/0 050 048 A1 beschreibt ein Mikroplatten-Lesegerät, das mehrere parallele Einheiten aus folgenden Elementen umfasst: ein lichtemittierender Abschnitt, der auf einer Seite einer Mikroplatte angeordnet ist und einer Vertiefung der Mikroplatte entspricht; ein Lichtempfangsabschnitt, der auf einer dem Lichtemissionsabschnitt gegenüberliegenden Seite der Mikroplatte angeordnet ist und der Vertiefung der Mikroplatte entspricht; und ein Lichtempfangs-Lichtleitweg, der zwischen dem Lichtempfangsabschnitt und der Mikroplatte angeordnet ist und das vom Lichtemissionsabschnitt emittierte Licht, das durch eine in der Vertiefung enthaltene Probe hindurchgeht, zum Lichtempfangsabschnitt leitet. Der Mikroplattenleser umfasst ferner einen Lichtleitabschnitt, der so ausgebildet ist, dass er mehrere der Lichtempfangs-Lichtleiterwege durch ein Gehäuseelement aus einem pigmenthaltigen Harz umschließt, das ein Pigment mit lichtabsorbierenden Eigenschaften enthält. Von einem Lichtemissionsabschnitt emittiertes Licht durchläuft einen Lichtempfangs-Lichtleiterweg und erreicht einen entsprechenden Lichtempfangsabschnitt.

In DE 10 2019 128 546 A1 sind eine Transmissionsvorrichtung zur Untersuchung von Proben in Kavitäten einer Mikrotiterplatte sowie ein entsprechendes Verfahren beschrieben. Die Transmissionsvorrichtung umfasst eine Beleuchtungseinrichtung und eine mit der Beleuchtungseinrichtung zusammensetzbare Detektionseinrichtung, zwischen denen im zusammengesetzten Zustand der Transmissionsvorrichtung ein Zwischenraum ausgebildet ist, der dazu eingerichtet ist, eine Mikrotiterplatte aufzunehmen, wobei die Beleuchtungseinrichtung wenigstens eine Emissionsquelle aufweist, die ausgebildet ist, von der Emissionsquelle erzeugtes Emissionslicht auf mehrere Teilstrahlengänge aufzuteilen, die im zusammengesetzten Zustand der Transmissionsvorrichtung durch den Zwischenraum verlaufen, wobei die Detektionseinrichtung Detektoreinheiten aufweist, die ausgebildet und angeordnet sind, entlang der Transmissionsstrahlengänge einfallende Lichtsignale separat zu messen. Die Beleuchtungseinrichtung und die Detektionseinrichtung sind so ausgebildet, dass die Transmissionsvorrichtung im zusammengesetzten Zustand als geschlossener Messaufbau ausgestaltet ist und der Zwischenraum lichtdicht von der Umgebung abgeschirmt ist.

JP 2006-317151 A zeigt eine Vorrichtung zum Messen von Biolumineszenz. Eine Lösung mit biologischen Proben wird in Kavitäten einer Probenplatte eingefüllt und mittels darunter angeordneten Fotodioden die Biolumineszenz gemessen.

In JP 2004-012411 A ist eine Vorrichtung zur Analyse von Biolumineszenz gezeigt. Die Proben werden in Kavitäten einer Mikrotiterplatte eingefüllt. Darunter ist eine Transmissionsplatte und eine Detektorvorrichtung angeordnet, die eine Vielzahl von Detektoren zur Messung der Biolumineszenz aufweist.

Es ist Aufgabe der vorliegenden Erfindung ein kompaktes Luminometer anzugeben, mittels dessen effizient, verläßlich und schnell Messungen an einer Vielzahl von Proben durchgeführt werden können.

Gelöst wird diese Aufgabe durch ein Luminometer zur Untersuchung von Proben in Kavitäten einer Mikrotiterplatte umfassend einen Zwischenraum zur Aufnahme der Mikrotiterplatte, wobei eine Detektorvorrichtung vorgesehen ist, die eine Mehrzahl von Lumineszenzsensoren aufweist, wobei jeder Kavität der Mikrotiterplatte, insbesondere genau, ein Lumineszenzsensor zugeordnet ist, wobei eine Shuttervorrichtung vorgesehen ist, die benachbart zu der Detektorvorrichtung angeordnet ist und für jeden Lumineszenzsensor eine Öffnung und eine Verdeckung aufweist, wobei die Öffnungen der Shuttervorrichtung in einer Ebene angeordnet sind, wobei die Shuttervorrichtung in der Ebene der Shuttervorrichtung translatorisch bewegbar ist. Dadurch, dass zu jeder Kavität der Mikrotiterplatte ein Lumineszenzsensor zugeordnet ist, ist es nicht mehr notwendig, die Mikrotiterplatte zum Messen aller Kavitäten der Mikrotiterplatte zu bewegen. Insbesondere ist auch jedem Lumineszenzsensor genau eine Kavität der Mikrotiterplatte zugeordnet. Die Anzahl der Kavitäten ist somit vorzugsweise gleich der Anzahl der Lumineszenzsensoren.

Hierdurch ist zum einen ein sehr kompaktes Luminometer möglich und zum anderen sind sehr schnelle Messungen und verlässliche Messungen möglich. Vorzugsweise sind die Kavitäten in der Mikrotiterplatte matrixartig angeordnet. Es sind somit die Kavitäten in einer Reihe und dort in Zeilen angeordnet. Vorzugsweise sind 96 Kavitäten vorgesehen, die in einer Matrix von vorzugsweise 8 mal 12 Kavitäten angeordnet sind. Vorzugsweise ist genau jeweils ein Lumineszenzsensor genau einer Kavität der Mikrotiterplatte zugeordnet. Es sind somit bei 96 Kavitäten genau 96 Sensoren vorgesehen.

Vorzugsweise arbeitet das Luminometer anregungslichtlos. Es ist somit keine Lichtquelle im Luminometer vorgesehen. Somit eignet sich das Luminometer vorzugsweise für Biolumineszenz- und Chemilumineszenzmessungen.

Vorzugsweise ist zu jedem Lumineszenzsensor eine Sammellinse, insbesondere eine Kugellinse, vorgesehen, wobei der jeweilige Lumineszenzsensor insbesondere in einem Fokus zu der zugehörigen Sammellinse angeordnet ist, wobei insbesondere die jeweilige Sammellinse im Strahlengang von einer Kavität zu einem zugeordneten Lumineszenzsensor angeordnet ist.

Es sind vorzugsweise genauso viele Sammellinsen vorgesehen wie Lumineszenzsensoren vorgesehen sind. Vorzugsweise ist die Sammellinse unmittelbar an den Zwischenraum angrenzend. Insbesondere vorzugsweise ist zwischen Sammellinse und Zwischenraum eine durchsichtige Platte vorgesehen, die die Sammellinsen zum Zwischenraum abdeckt.

Für das Luminometer ist eine Shuttervorrichtung vorgesehen oder das Luminometer umfasst eine Shuttervorrichtung, die benachbart zu der Detektorvorrichtung angeordnet ist und für jeden Lumineszenzsensor eine Öffnung und eine Verdeckung aufweist. Die Shuttervorrichtung kann beispielsweise genauso viele Öffnungen aufweisen wie Lumineszenzsensoren vorgesehen sind und als eine Art verschließbare Blende vorgesehen sein. Es sind somit als Shuttervorrichtung eine Mehrzahl von verschließbaren Blenden denkbar, die insbesondere im Strahlengang von der Sammellinse zu dem jeweiligen Lumineszenzsensor angeordnet sind.

Vorzugsweise sind die Lumineszenzsensoren der Detektorvorrichtung in einer Ebene, insbesondere auf einer Platte, angeordnet. Hierdurch ist eine besonders platzsparende Anordnung möglich, wobei gleichzeitig eine hohe Lichtausbeute der Lumineszenzsensoren möglich ist.

Die Öffnungen der Shuttervorrichtung sind in einer Ebene angeordnet, wobei die Shuttervorrichtung in der Ebene der Shuttervorrichtung translatorisch bewegbar ist. Vorzugsweise sind die Öffnungen, und insbesondere die Verdeckungen, der Shuttervorrichtung in der Ebene in oder auf einer Platte angeordnet, die insbesondere parallel zu der Ebene der Detektorvorrichtung liegt oder ist. Hierdurch ist eine sehr kompakte Bauweise der Shuttervorrichtung möglich.

Insbesondere weist die Shuttervorrichtung eine Platte auf, die eine Anzahl von Öffnungen aufweist, die der Anzahl der Lumineszenzsensoren des Luminometers entspricht. Die Öffnungen können als Bandpassfilter ausgebildet sein, wobei insbesondere die Frequenzen des Lumineszenzlichtes der Proben im durchlässigen Bereich des Bandpassfilters liegen. Zudem ist benachbart zu den Öffnungen das Plattenmaterial, also keine Öffnung, vorgesehen, um hierdurch auch Verdeckungen oder Abschattungen zu ermöglichen.

Insbesondere vorzugsweise ist die Shuttervorrichtung als in der Ebene der Shuttervorrichtung bewegbare Lochplatte ausgebildet, die insbesondere vorzugsweise mittels eines Schrittmotors linear in der Ebene bewegbar ist oder bewegt wird. Die Shuttervorrichtung ist in der Ebene der Shuttervorrichtung translatorisch bewegbar. Hierdurch können Bereiche der Shuttervorrichtung vor die Lumineszenzsensoren oder zwischen die Sammellinsen und die Lumineszenzsensoren gebracht werden, die durchlässig für die Lumineszenzstrahlen sind und Bereiche dorthin gebracht werden, die undurchlässig sind.

Besonders bevorzugt ist eine Shuttervorrichtung, bei der es, insbesondere zusätzlich, ermöglicht wird, dass das Lumineszenzlicht, dass zu den Lumineszenzsensoren gerichtet ist nur teilweise zu den Lumineszenzsensoren gelassen wird. Man könnte beispielsweise den Shutter so bewegen, dass die Öffnung nur halb offen ist. Es können auch Shutter denkbar sein, in denen in Öffnungen Graufilter angeordnet sind.

Beispielsweise können auch zwei Shuttervorrichtungen vorgesehen sein, eine Shuttervorrichtung, die Öffnungen aufweist und eine zweite parallel dazu angeordnete Shuttervorrichtung, die Öffnungen mit Filtern, insbesondere Graufiltern und/oder Bandpassfiltern aufweist oder eine, insbesondere weitere, Shuttervorrichtung, die im Bereich der Öffnung kleinere Öffnungen aufweist als die erste Shuttervorrichtung. Auf diese Weise kann dafür gesorgt werden, dass kein Lumineszenzlicht auf die Lumineszenzsensoren fällt, nur ein Teil des Lumineszenzlichtes auf die Sensoren fällt oder die gesamte Lumineszenzstrahlung aus der Probe, die in Richtung der Lumineszenzsensoren gesendet wird auch auf die Sensoren fällt. Auch die weiteren Shuttervorrichtungen können vorzugsweise translatorisch in der Ebene dieser Shuttervorrichtung beispielsweise mittels eines Schrittmotors bewegt werden.

Die Shuttervorrichtung umfasst in einer Ausführungsform benachbart einen lichtdurchlässigen Bereich mit einer Öffnung, einen lichtdurchlässigen Bereich mit einem Filter und/oder einer kleineren Öffnung und einen lichtundurchlässigen Bereich. Der Filter kann ein Graufilter oder ein Bandpassfilter sein. Die Shuttervorrichtung weist in dieser Ausführungsform eine Mehrzahl dieser benachbarten Bereiche auf. Insbesondere ist die Anzahl dieser benachbarten Bereiche gleich der Anzahl der Lumineszenzsensoren.

Vorzugsweise sind die Öffnungen der Shuttervorrichtung oder der Shuttervorrichtungen, die Lumineszenzssensoren und die Kavitäten in einem gleichen Raster angeordnet. Vorzugsweise ist das Raster in einer Matrix vorgesehen. Vorzugsweise einspricht die Anordnung der Sammellinsen dem Raster der Lumineszenzssensoren.

Vorzugsweise ist eine Auswerteelektronik vorgesehen, die ausgestaltet ist, die Messvorgänge von wenigstens zwei, insbesondere wenigstens vier, insbesondere wenigstens sechs, Lumineszenzsensoren gleichzeitig und/oder parallel aufzunehmen und/oder auszuwerten. Die Auswerteelektronik kann auch so ausgestaltet sein, dass noch mehr Lumineszenzsensoren gleichzeitig und/oder parallel aufgenommen und/oder ausgewertet werden bis zu allen Lumineszenzsensoren.

Ferner ist es vorzugsweise vorgesehen, dass eine Auswahl der gleichzeitig aufzunehmenden und/oder auszuwertenden Lumineszenzsensoren durch eine Bedienperson möglich ist. So können beispielsweise Blöcke von 2 mal 3 Proben gleichzeitig ausgewertet werden oder Blöcke von 2 mal 2 oder 4 mal 4 Proben gleichzeitig ausgewertet werden. Die Auswerteelektronik weist somit vorzugsweise eine entsprechende Anzahl von gleichen Bauelementen auf, die für die gleichzeitige Auswertung bzw. Messung der Proben ausgestaltet sind. Unter einer gleichzeitigen Aufnahme bzw. Messung und/oder gleichzeitigen Auswertung der Messergebnisse wird verstanden, dass diese tatsächlich gleichzeitig stattfinden und nicht über ein Multiplexverfahren in einem Messzyklus hintereinander.

Insbesondere vorzugsweise ist es vorgesehen, dass mehrere Proben gleichzeitig gemessen werden und anschließend wieder die gleiche Anzahl mehrerer anderer Proben gleichzeitig gemessen werden usw. bis alle Proben vermessen ist. Es wird also eine Art blockweise gleichzeitiges Messen und Multiplexverfahren für die mehreren Blöcke vorgesehen.

Vorzugsweise sind die Detektorvorrichtung und die Mikrotiterplatte zur Messung einer Mehrzahl der Proben, insbesondere aller Proben, in den Kavitäten ortsfest. Es wird also bis auf den Shutter oder die Shuttervorrichtung in dem Luminometer nichts bewegt.

Vorzugsweise ist der Zwischenraum im Wesentlichen formkomplementär zu der in den Zwischenraum einbringbaren oder aufgenommenen Mikrotiterplatte.

Vorzugsweise weist das Luminometer einen Deckelkörper und einen Bodenkörper auf, die formschlüssig zueinander sind, wobei insbesondere im Deckelkörper die Detektorvorrichtung angeordnet ist. Zusätzlich kann im Deckelkörper auch das Hauptplatine (Mainboard) angeordnet sein. Außerdem kann in dem Deckelkörper eine Sammellinsenhalterung, auf der alle Sammellinsen angeordnet sind und in einer Ebene vorzugsweise gehalten werden, als auch die Shuttervorrichtung, die vorzugsweise zwischen der Linsenhalterung und der Detektorvorrichtung angeordnet ist, vorgesehen sein.

Vorzugsweise ist ein Sensor, insbesondere ein Beschleunigungssensor und/oder ein Lagesensor, vorgesehen, der ausgebildet ist, eine Lagepositionierung des Luminometers zu erfassen. Hierdurch kann festgestellt werden, ob das Luminometer auf dem Bodenkörper aufliegt oder auf dem Deckelkörper aufliegt.

Wenn das Luminometer auf dem Bodenkörper aufliegt wird die Mikrotiterplatte so eingebracht, dass die obenliegenden Öffnungen der Kavitäten zu dem Deckel oder Deckelkörper, also den Lumineszenzsensoren, ausgerichtet sind. Wenn das Luminometer auf dem Deckelkörper aufliegend positioniert wird, wird die Mikrotiterplatte so eingelegt, dass der Boden der Kavitäten der Mikrotiterplatte zu den Lumineszenzsensoren ausgerichtet ist, so dass auch eine Messung durch die dann vorzugsweise transparenten Böden der Kavitäten der Mikrotiterplatte möglich ist. Die Positionierung der Proben ist bei den beiden verschiedenen Positionierungen spiegelverkehrt. Durch Erkennen der Positionierung des Luminometers wird dieses bei der Auswertung der Messung berücksichtigt.

Vorzugsweise sind insbesondere verschließbare Öffnungen im Bodenkörper angeordnet, die eine Befüllung der Kavitäten der Mikrotiterplatte in dem Luminometer ermöglichen. Hierbei kann eine Befüllung der Kavitäten der Mikrotiterplatte mit der Probe geschehen oder aber, was bevorzugt ist, mit einem weiteren Mittel, dass die Lumineszenz chemisch oder biologisch anregt. Hierdurch ist insbesondere eine Flashmessung möglich, also eine sehr schnelle Messung der Lumineszenz nach Befüllung der Proben mit einem Anregungsmittel. Die verschließbaren Öffnungen sind im geschlossenen Zustand insbesondere lichtdicht.

Vorzugsweise ist ein Sensor, insbesondere ein Time-of-Flight-Sensor, vorgesehen, mittels dessen überprüfbar ist, ob eine Mikrotiterplatte in dem Zwischenraum eingebracht ist und/oder ob der Deckelkörper auf dem Bodenkörper aufgesetzt ist.

Vorzugsweise ist die Auswerteelektronik, insbesondere inklusive der Auswertesoftware, in dem Luminometer vorgesehen.

Die Lumineszenzsensor sind vorzugsweise Silizium-Photomultiplier, die eine kleine Größe, eine hohe Robustheit und geringe Kosten im Vergleich zu Photomultiplier-Röhren aufweisen.

Vorzugsweise sind in den Luminometer Temperatursensoren vorgesehen. Die Temperatursensoren sind vorzugsweise an mehreren Stellen der Detektorvorrichtung, insbesondere in der Ebene der Lumineszenzsensoren angeordnet, um einen etwaigen Temperaturdrift sehr genau berücksichtigen zu können.

Die Aufgabe wird ferner gelöst durch ein Verfahren zum Untersuchen von Proben in Kavitäten in einer Mikrotiterplatte mittels Lumineszenzmessungen, wobei die Mikrotiterplatte in einem Zwischenraum zwischen einem Bodenkörper und einem Deckelkörper eines Luminometers angeordnet ist oder wird und im Deckelkörper eine Mehrzahl von Lumineszenzsensoren einer Detektorvorrichtung angeordnet sind, wobei jeder Kavität der Mikrotiterplatte wenigstens ein Lumineszenzsensor zugeordnet ist und Lumineszenzlicht aus der jeweiligen Kavität mit dem jeweiligen zugeordneten Lumineszenzsensor gemessen wird, wobei eine Shuttervorrichtung vorgesehen ist, mittels der das Lumineszenzlicht aus jeder Kavität gleichzeitig bei der Messung durch den Lumineszenzsensor, der der jeweiligen Kavität zugeordnet ist, durchgelassen, geblockt oder gefiltert wird, wobei die Shuttervorrichtung benachbart zu der Detektorvorrichtung angeordnet ist und für jeden Lumineszenzsensor eine Öffnung und eine Verdeckung aufweist, wobei die Öffnungen der Shuttervorrichtung in einer Ebene angeordnet sind, wobei die Shuttervorrichtung in der Ebene der Shuttervorrichtung translatorisch bewegt wird. Durch das erfindungsgemäße Verfahren ist ein sehr effizientes und genaues Messverfahren möglich. Vorzugsweise sind die Lumineszenzsensoren Silizium-Photomultiplier.

Insbesondere vorzugsweise wird das Verfahren ohne Anregungslicht durchgeführt. Es wird insbesondere ein Biolumineszenz- oder Chemilumineszenzverfahren durchgeführt.

Vorzugsweise wird das Lumineszenzlicht zunächst durch jeweils eine Sammellinse, insbesondere Kugellinse, auf jeweils einen Lumineszenzsensor fokussiert. Hierdurch wird erreicht, dass die volle Ausbeute des Lumineszenzlichtes aus den Proben auch erfasst wird.

Es ist eine Shuttervorrichtung vorgesehen, mittels der das Lumineszenzlicht aus jeder Kavität gleichzeitig bei der Messung durch den der jeweiligen der Kavität zugeordneten Lumineszenzsensor durchgelassen, geblockt oder gefiltert wird. Zudem ist es möglich die Shuttervorrichtung so anzuordnen oder so zu steuern, dass diese das Lumineszenzlicht ungefiltert und vollständig zu den Lumineszenzsensoren durchlässt.

Vorzugsweise wird zur Korrektur der Messergebnisse eine Dunkelzählrate, insbesondere mehrmals während der Messung, bestimmt. Hierdurch wird es möglich, auch bei einer geringen Lumineszenzrate ein gutes Messergebnis zu erzielen, obwohl bei Verwendung von beispielsweise Silizium-Photomultiplier eine hohe Dunkelzählrate entsteht.

Vorzugsweise werden je nach Intensität des Lumineszenzlichts der Probe oder der Proben verschiedene Messmethoden verwendet, insbesondere eine Geigermodusmessmethode, eine Integrationsmodusmessmethode, eine Integrationsmodusmessmethode mit teilweise Abdeckung der Kavität, eine Integrationsmodusmessmethode mit einem Graufilter und/oder eine Kombination dieser Messmethoden.

Bei der Geigermodusmessmethode werden die Lichtpulse gezählt. Bei der Integrationsmodusmessmethode wird ein Strom über einen Zeitraum, insbesondere einen vorbestimmten Zeitraum oder einen bestimmbaren Zeitraum, gemessen und somit eine Integration der Messergebnisse bzw. des Messstroms durchgeführt.

Bei einer niedrigen Intensität wird vorzugsweise eine Geigermodusmessmethode verwendet, bei einer mittleren Intensität eine Integrationsmodusmessmethode und bei einer sehr hohen oder hohen Intensität, bei der zu befürchten ist, dass die Lumineszenzsensoren, insbesondere die Silizium-Photomultiplier in eine Sättigung gelangen, wird die Kavität oder der Sensor teilweise abgedeckt oder die Öffnung verkleinert, d.h. die Fläche, die von der Probe abgebildet wird, verkleinert oder ein Graufilter verwendet.

Um die Übergänge der verschiedenen Intensitäten und Messmethoden gut abzudecken, wird bevorzugt eine Kombination der Messmethoden durchgeführt. Beispielsweise kann eine Geigermodusmessmethode und eine Integrationsmodusmessmethode gleichzeitig oder hintereinander durchgeführt werden und ein Mittelwert dieser beiden Messmethoden gebildet werden. Vorzugsweise wird ein Faktor der Messergebnisse im Überlappbereich der verschiedenen Messmethoden bestimmt, der dann in den Messkurven berücksichtigt wird. Der Faktor kann als Voreinstellung gespeichert sein oder im Betrieb des Luminometers bestimmt werden.

Vorzugsweise ist eine Bottom-Up-Konfiguration ermöglicht, um eine Lumineszenzmessung durch den Boden der Kavitäten durchzuführen. Insbesondere durch diese Maßnahme ist vorzugsweise eine Flashmessung möglich.

Vorzugsweise wird eine Flashmessung, eine Endpunktmessung oder eine kinetische Messung durchgeführt.

Bei einer Flashmessung handelt es sich um eine sehr schnelle und kurze Messung, insbesondere unmittelbar nach dem Zuführen eines Anregungsmittels in die Probe. Bei einer Endpunktmessung wird die Probe einmal vermessen und die Lumineszenz bestimmt. Bei einer kinetischen Messung wird die Probe über einen vorgebbaren Zeitraum immer wieder gemessen und geschaut, wie sich die Lumineszenz über die Zeit verändert.

Vorzugsweise werden die Messungen an allen Proben in den Kavitäten der Mikrotiterplatte ohne ein Bewegen der Mikrotiterplatte und der Detektorvorrichtung zwischen der ersten und der letzten Messung durchgeführt. Hierdurch ist eine sehr schnelle und genaue Messung möglich.

Vorzugsweise werden die Messungen wenigstens teilweise gleichzeitig und/oder parallel durchgeführt.

Es ist Ziel der Erfindung ein kompaktes und benutzerfreundliches Gerät anzubieten, das sich für Endpunktanwendung, kinetische Anwendung und Flashanwendungen einsetzen lässt.

Ein kompaktes Gerät, insbesondere ein kompakter Luminometer, also ein kompaktes Lumineszenzmessgerät bietet den Vorteil von einer dezentralisierten Anwendung, bei denen Flexibilität und Mobilität wichtig sind. Auch für die Integration in automatisierte Anwendungen ist die kompakte Größe von Vorteil, da das Luminometer einfacher in bestehende Systeme integriert werden kann. Darüber hinaus bietet ein kompaktes Luminometer auch für den Einsatz in kleinen Laboren oder an Orten mit begrenztem Platzangebot Vorteile.

Es sollen vorzugsweise in dem Luminometer 96 Detekoren, insbesondere Lumineszenzsensoren verwendet werden, um auf eine Verfahrmechanik zum Messen von 96 Proben in 96 Kavitäten einer Mikrotiterplatte verzichten zu können. Die großen Photomultiplier-Röhren lassen sich allerdings nicht in 96 Gitterpunkten mit einem kleinen Fußabdruck einsetzen.

Insbesondere vorzugsweise ist ein Abstand, d.h. insbesondere Pitch, der Lumineszenzsensoren von 5 mm bis 15 mm, insbesondere vorzugsweise von 9 mm vorgesehen. Vorzugsweise werden somit Silizium-Photomultiplier verwendet. Der Vorteil dieser Silizium-Photomultiplier ist deren kompakte Größe, Robustheit und geringe Kosten im Vergleich zu Photomultiplier-Röhren. Nachteilig ist bei den Silizium-Photomultipliern eine hohe Dunkelzählrate, die bei Raumtemperatur mehrere 10.000 betragen kann, wohingegen Photomultiplier-Röhren nur wenige 100 Zählraten bei Raumtemperatur aufweisen.

Um diesen Nachteil zu kompensieren, wird erfindungsgemäß eine direkte Optik verwendet, die auf zusätzliche Elemente wie Glasfasern etc. verzichtet. In der Optik wird vorzugsweise nur eine Linse und ein Detektor bzw. ein Lumineszenzsensor im Strahlengang verwendet, die auch noch so nah wie möglich an die Probe gebracht werden, um so viel wie möglich an Licht einzufangen. Zusätzlich kann noch eine dünne transparente Scheibe zwischen den Linsen und den Proben bzw. der Mikrotiterplatte vorgesehen sein, um die Optik zu den Proben hin einfach reinigen zu können.

Vorzugsweise wird eine Shuttervorrichtung verwendet, um mehrmals während einer Messung die Dunkelzählrate zu messen und diesen wieder zur Korrektur des Messergebnisses zu verwenden.

Bei einer geringen Lumineszenz wird vorzugsweise länger gemessen, insbesondere eine längere Integration durchgeführt, um die Messgenauigkeit zu verbessern. Die Shuttervorrichtung wird vorzugsweise mittels eines Schrittmotors bewegt um einige Konfigurationen der Shuttervorrichtung zu ermöglichen. Zu diesen Konfigurationen zählen insbesondere das Durchlassen des Lumineszenzlichts, und zwar vollständig zu dem Sensor und das vollständige Blockieren des Lichts zu dem Lumineszenzsensor.

Es kann auch ein teilweises Öffnen vorgesehen sein. Es können auch mehrere Shuttervorrichtungen vorgesehen sein, um beispielsweise verschieden große Öffnungen vorzusehen oder auch einen Shutter mit Graufiltern.

Um die Messungen durchzuführen wird zunächst eine initiale Messung durchgeführt, um festzustellen, welche Kanäle, d.h. welche Proben wenig Licht aufweisen, diese Kanäle bzw. Proben können in einem weiteren Messschritt länger integriert werden, um das Rauschen zu reduzieren. Kanäle, die ausreichend Licht aufweisen, werden nicht länger integriert, um die Messzeit zu optimieren. Zudem wird zur Messzeitoptimierung eine Mehrfachelektronik, insbesondere vorzugsweise Sechsfachelektronik verwendet, die es ermöglicht, mehrere, insbesondere vorzugsweise sechs Lumineszenzsensoren parallel auszulesen. Dies erhöht die Geschwindigkeit der Messung und erlaubt es, die Messzeit zu verkürzen, ohne die Genauigkeit der Messung zu beeinträchtigen.

Die Lumineszenz kann sowohl von der Oberseite als auch von der Unterseite einer Mikrotiterplatte ausgelesen werden. Um dies zu ermöglichen kann das Luminometer einfach umgedreht werden und die Ausleseoptik auf die gewünschte Seite platziert werden. Beim Umdrehen des Luminometers wird die Anordnung der Kanäle allerdings gespiegelt. Aus diesem Grunde muss detektiert werden, in welche Orientierung das Gerät beim Auslesen platziert wurde. Hierzu wird ein Lagesensor eingesetzt, der die aktuelle Ausrichtung des Luminometers erkennt und die Kanalanordnung entsprechend anpasst.

Um den Dynamikumfang zu optieren werden drei Verfahrensarten eingesetzt. Es werden die Lumineszenzsensoren im Geigermode ausgelesen. Dies ermöglicht es, sehr schwache Lumineszenzsignale zu erkennen und aufzuzeichnen. Als nächster Modus ist der Integrationsmodus vorgesehen, der bei mittleren und hohen Lumineszenzintensitäten vorgesehen ist. Hier wird der Strom über einen vorgegebenen Zeitpunkt gemessen und integriert. Bei sehr hohen Lumineszenzintensitäten wird beispielsweise ein Graufilter verwendet oder der Shutter so eingestellt, dass nicht alles Licht auf den Lumineszenzsensor fällt. Als Graufilter kann beispielsweise ein OD3-Filter, der nur 0,1 % Licht durchlässt, verwendet werden. Alternativ kann auch ein OD2- oder ein OD1-Filter verwendet werden. Zudem ist es sinnvoll, die Übergangsbereiche dieser drei Verfahren oder Methoden überlappen zu lassen, um die in der gesamten Bandbreite der Lumineszenzintensitäten präzise Messungen zu ermöglichen, ohne dass es zu Verzerrungen oder Fehlern kommt.

Da alle Lichtquellen von den Proben selbst stammen und gleichzeitig vorhanden sind, besteht die Gefahr, das benachbarte Kanäle übersprechen. Um dies zu vermeiden werden zum einen die benachbarten Detektoren voneinander getrennt, um sicherzustellen, dass das Licht nur von der gewünschten Quelle aufgenommen wird. Hierzu ist auf der Detektorvorrichtung bzw. der Platte, auf der die Detektoren angeordnet sind, eine Platte vorgesehen, die Löcher aufweist, die eine bestimmte und vorgebbare Tiefe aufweisen, so dass die Lumineszenzsensoren in diesen Löchern eingebracht werden und somit von Wänden umgeben sind. Die Lochplatte wird vorzugsweise bündig auf die Detektorplatte bzw. Sensorplatte aufgebracht. Alternativ kann die Lochblende integral mit der Detektorvorrichtung sein.

Als nächste Maßnahme wird die Mikrotiterplatte so nah wie möglich an die Optik gebracht, um die Empfindlichkeit zu erhöhen und das Übersprechen zu reduzieren. Durch die Kombination dieser beiden Maßnahmen wird sichergestellt, dass die Lumineszenzsignale genau und zuverlässig von dem gewünschten Kanal erfasst werden ohne dass benachbarte Kanäle beeinträchtigt werden.

Es kann vorgesehen sein, vor jedem Start ein Selbsttest durchzuführen, bei dem diverse Spannungen und Ströme, insbesondere an der Hauptplatine bzw. des Mainboards, überprüft werden.

In einer Ausführungsform kann eine Leuchtdiode verwendet werden, die in den leeren Schacht leuchtet, um zu prüfen, ob alle Lumineszenzsensoren ordnungsgemäß funktionieren. Hierdurch kann sichergestellt werden, dass das Gerät ordnungsgemäß funktioniert und keine Fehler aufweist, bevor es zum Einsatz kommt.

Um zu detektieren, ob eine Mikrotiterplatte im Schacht eingelegt ist und insbesondere auch korrekt im Schacht eingelegt ist, ist ein Time-of-Flight-Sensor vorgesehen. Dieser Sensor kann auch vorgesehen sein, um zu erkennen, ob der Deckel bzw. der Deckelkörper des Luminometers auf den Bodenkörper aufgebracht ist und ob dieser richtig aufgebracht ist. Durch den Time-of-Flight-Sensor kann die Nutzung des Luminometers verbessert werden. Insbesondere kann der Time-of-Flight-Sensor dafür sorgen, dass der Selbsttest des Luminometers automatisch ausgelöst wird, sobald keine Mikrotiterplatte im Schacht bzw. Zwischenraum eingelegt wird. Insbesondere kann der Time-of-Flight-Sensor in Betrieb genommen werden, sobald der Deckelkörper auf den Bodenkörper aufgesetzt wird oder andersherum. Im Rahmen der Erfindung beinhaltet der Begriff Zwischenraum auch den Begriff Schacht und umgekehrt.

Um den Status des Luminometers und der aktuellen Messung anzuzeigen, ist in einer Ausführungsform eine Anzeigevorrichtung vorgesehen. Hierbei kann es sich um eine LED-Leiste mit mehreren Leuchtdioden handeln oder ein Touchdisplay vorgesehen sein. Mit Hilfe dieser Anzeige können dem Benutzer wichtige Informationen, wie der aktuellen Status des Gerätes, der Fortschritt der Messung und mögliche Fehler angezeigt werden. Dies erhöht die Benutzerfreundlichkeit und ermöglicht es dem Benutzer, das Gerät leichter und sicherer zu bedienen. Die Anzeige kann auch zur Steuerung des Geräts und zur Eingabe von Parametern genutzt werden.

Die Sammellinse kann als Kugellinse ausgebildet sein. Hier eignet sich eine Kugellinse mit einem Durchmesser von 4 mm bis 8 mm, insbesondere 5 mm bis 7 mm, insbesondere vorzugsweise 6 mm. Der Fokus dieser Kugellinse liegt vorzugsweise ca. 1mm bis 3 mm von der Oberfläche der Kugellinse entfernt. Vorzugsweise ist dieser bei 1,5 mm. Vorzugsweise ist der Abstand der Kugellinse zu der Kavität der Mikrotiterplatte im Bereich von 0,5 mm bis 2 mm, insbesondere vorzugsweise 1 mm.

Weitere Merkmale der Erfindung werden aus der Beschreibung erfindungsgemäßer Ausführungsformen zusammen mit den Ansprüchen und den beigefügten Zeichnungen ersichtlich. Erfindungsgemäße Ausführungsformen können einzelne Merkmale oder eine Kombination mehrerer Merkmale erfüllen.

Im Rahmen der Erfindung sind Merkmale, die mit "insbesondere" oder "vorzugsweise" gekennzeichnet sind, als fakultative Merkmale zu verstehen.

Die Erfindung wird nachstehend ohne Beschränkung der beanspruchten Erfindung anhand von Ausführungsbeispielen unter Bezugnahme auf die Zeichnungen beschrieben, wobei bezüglich aller im Text nicht näher erläuterten erfindungsgemäßen Einzelheiten ausdrücklich auf die Zeichnungen verwiesen wird. Es zeigen:
- Fig. 1: eine schematische dreidimensionale Explosionsdarstellung des erfindungsgemäßen Luminometers,

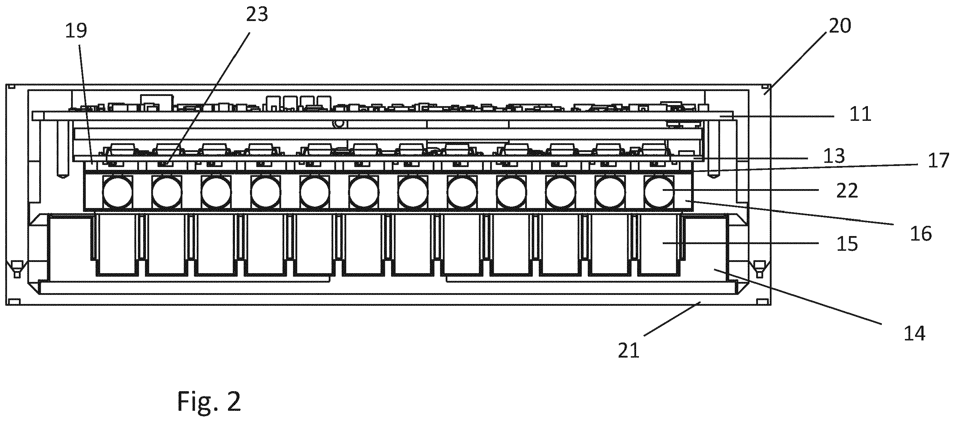

- Fig. 2: eine schematische Schnittdarstellung durch das erfindungsgemäße Luminometer aus Fig. 1,
- Fig. 3: eine schematische Draufsicht auf eine Detektorvorrichtung,
- Fig. 4: eine schematische Draufsicht auf eine Shuttervorrichtung,
- Fig. 5: eine schematische Draufsicht auf eine weitere Shuttervorrichtung,
- Fig. 6: eine weitere schematische Darstellung einer Shuttervorrichtung,
- Fig. 7: eine schematische dreidimensionale Darstellung des Luminometers in einer Bottom-Up-Ausrichtung,
- Fig. 8: eine schematische dreidimensionale Darstellung einer Bottom-Down-Ausrichtung,
- Fig. 9: eine schematische Darstellung eines erfindungsgemäßen Luminometers für eine Flashmessung und
- Fig. 10: eine dreidimensionale schematische Darstellung des erfindungsgemäßen Luminometers im zusammengebauten Zustand mit einer Pipettiervorrichtung.

In den Zeichnungen sind jeweils gleiche oder gleichartige Elemente und/oder Teile mit denselben Bezugsziffern versehen, so dass von einer erneuten Vorstellung jeweils abgesehen wird.

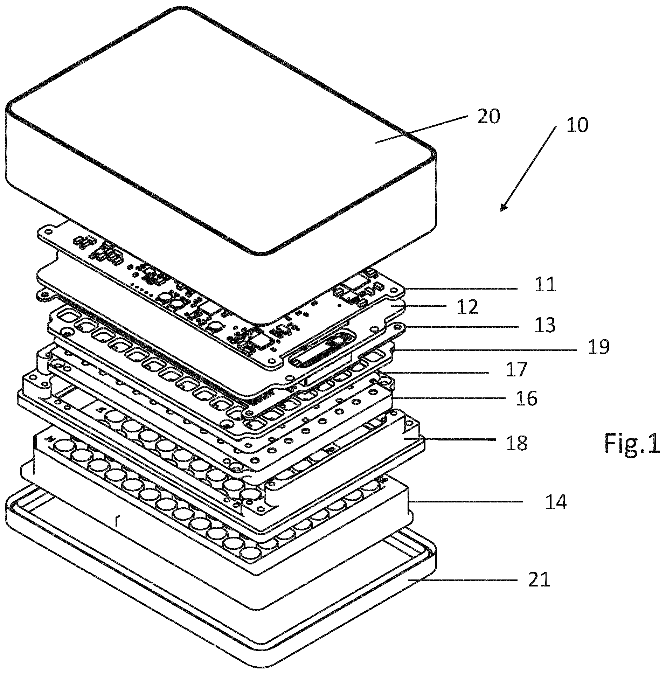

Fig. 1 zeigt schematisch eine erfindungsgemäßes Luminometer 10 in einer Explosionsdarstellung. Ein Deckelkörper 20 ist oben dargestellt und unten ein Bodenkörper 21. Die Deckelkörper 20 und Bodenkörper 21 sind am Rand und im Kontaktbereich zwischen den beiden so ausgestaltet, dass diese formschlüssig in einander passen oder greifen. Unterhalb vom Deckelkörper 20 ist zunächst eine Hauptplatine 11 vorgesehen, in der insbesondere Messwerte verarbeitet werden und die Auswertung der Messung durchgeführt wird. Mit 13 ist eine Detektorvorrichtung dargestellt, auf der die Lumineszenzsensoren in diesem Ausführungsbeispiel in Form von Silizium-Photodioden aufgebracht sind. Die Silizium-Photodioden sind in der Fig. 1 nach unten ausgerichtet. Zwischen der Detektorvorrichtung 13 und der Hauptplatine 11 ist eine Abschirmung 12 vorgesehen. Diese dient insbesondere zur thermischen Abschirmung der Detektorvorrichtung 13 zu der Hauptplatine 11.

Unterhalb der Detektorplatine ist ein Lumineszenzsensorrahmen 19 vorgesehen, der eine entsprechende Breite aufweist, wobei die Lumineszenzsensoren in Durchbrechungen des Rahmens 19 angeordnet sind. Hierdurch wird ein Übersprechen der Lumineszenzsensoren verhindert, indem im zusammengebauten Zustand des Deckelkörpers mit den in den Deckelkörper aufzunehmenden Teilen die Lumineszenzsensoren von Wänden umgeben sind.

Unterhalb des Lumineszenzsensorrahmens 19 ist eine Shuttervorrichtung 17 dargestellt. Die Shuttervorrichtung 17 kann mittels eines nicht dargestellten Schrittmotors transversal, insbesondere linear in Längsrichtung der Shuttervorrichtung 17 bewegt werden, um die Lichteinstrahlung zu den Sensoren zu ermöglichen oder abzudecken.

Unterhalb der Shuttervorrichtung 17 ist eine Linsenhalterung 16 vorgesehen, in der Sammellinsen angeordnet sind. Mit 18 ist ein Rahmen dargestellt, der für einen passenden Sitz der Mikrotiterplatte 14 in einen Zwischenraum, der in diesem Fall durch die Mikrotiterplatte 14 ausgefüllt ist, ermöglicht. Die Mikrotiterplatte 14 ist oberhalb von dem Bodenkörper 21 vorgesehen und passt in den Bodenkörper. Der Rahmen 18 hat auf der kurzen Seite, die im Wesentlichen in der Figur verdeckt ist, eine Öffnung, um die Mikrotiterplatte 14 in den Zwischenraum einzubringen. Alternativ kann der Rahmen 18 auch geschlossen sein. Der Deckelkörper 20 kann entsprechend auch, für den Fall, dass die Mikrotiterplatte 14 eingeschoben werden können soll, eine Öffnung haben oder für den Fall, dass der Versuchsaufbau komplett geschlossen stattfinden soll, auch geschlossen sein.

Die Elemente 11, 12, 13, 19, 17, 16 und 18 sind vorzugsweise mit dem Deckelkörper 20 verbunden, beispielsweise durch Schraubverbindungen.

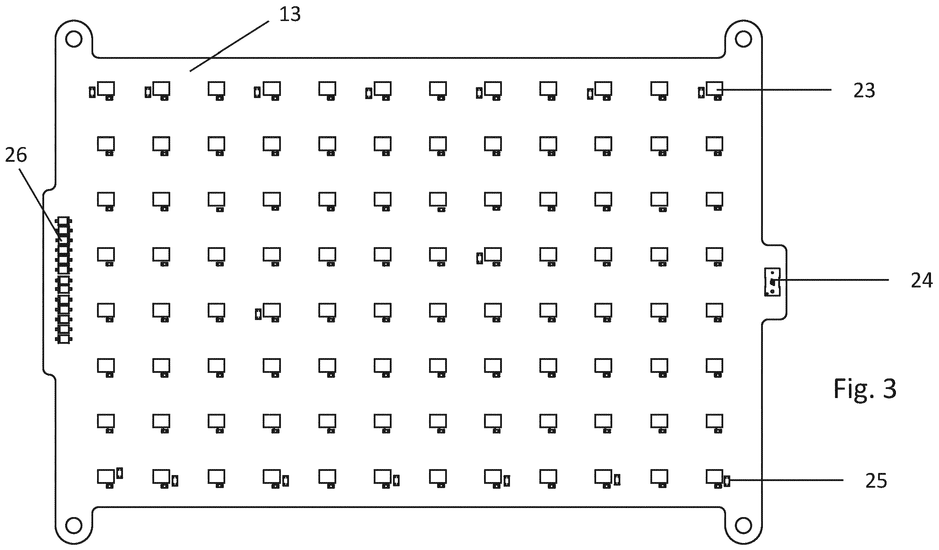

Fig. 3 zeigt schematisch eine Draufsicht auf eine Detektorvorrichtung 13, auf der 96 Lumineszenzsensoren 23 angeordnet sind. Es ist zudem ein Time-of-Flight-Sensor 24 auf der Detektorvorrichtung 13 vorgesehen. Der Time-of-Flight-Sensor kann auch an anderer Stelle in dem Luminometer 10 angeordnet sein. Zudem sind 16 Temperatursensoren 25 auf der Detektorvorrichtung 13 angeordnet. Die Detektorvorrichtung 13 kann in Form einer Platine ausgebildet sein. Um einen elektrischen Kontakt mit der Hauptplatine 11 zu ermöglichen, sind elektrische Kontakte 26 vorgesehen. Die Lumineszenzsensoren sind in einer Matrix angeordnet.

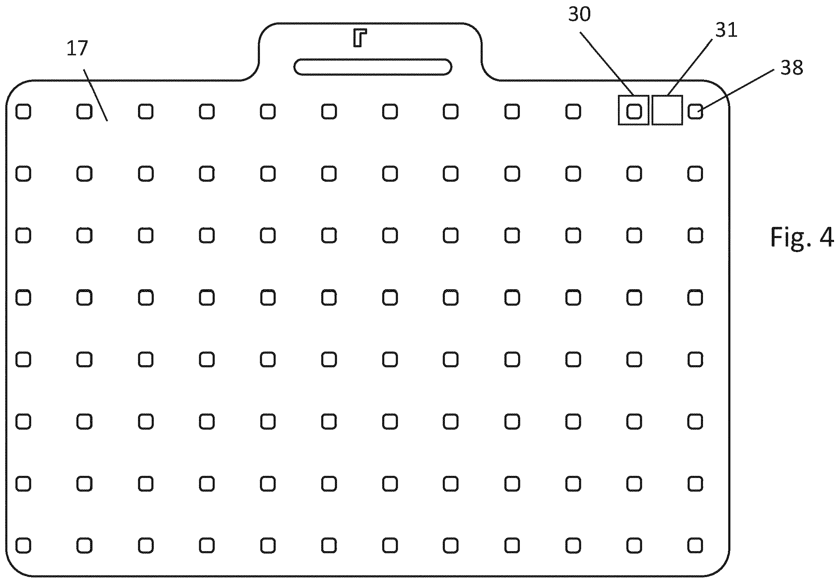

Fig. 4 zeigt eine Ausführungsform einer Shuttervorrichtung 17. Es sind dort offene Bereiche 30 und geschlossene Bereiche 31 gezeigt. In dem offenen Bereich ist eine Öffnung 38 vorgesehen. In dem geschlossenen Bereich 31 ist schlicht das Material der aus einer Platte hergestellten Shuttervorrichtung 17 vorgesehen. Die Ausbuchtung im oberen Bereich in der Fig. 4 dient zum Eingreifen eines Schrittmotors, um die Shuttervorrichtung 17 in Längsrichtung hin und her zu bewegen. Der zu der Öffnung 38 gehörige Lumineszenzsensor 23 kann in dieser Anordnung genau gegenüber der Öffnung 38 angeordnet sein. Wenn die Shuttervorrichtung 17 etwas nach rechts verschoben wird, kommt der zugehörige Lumineszenzsensor in die Abdeckung des geschlossenen Bereichs 31.

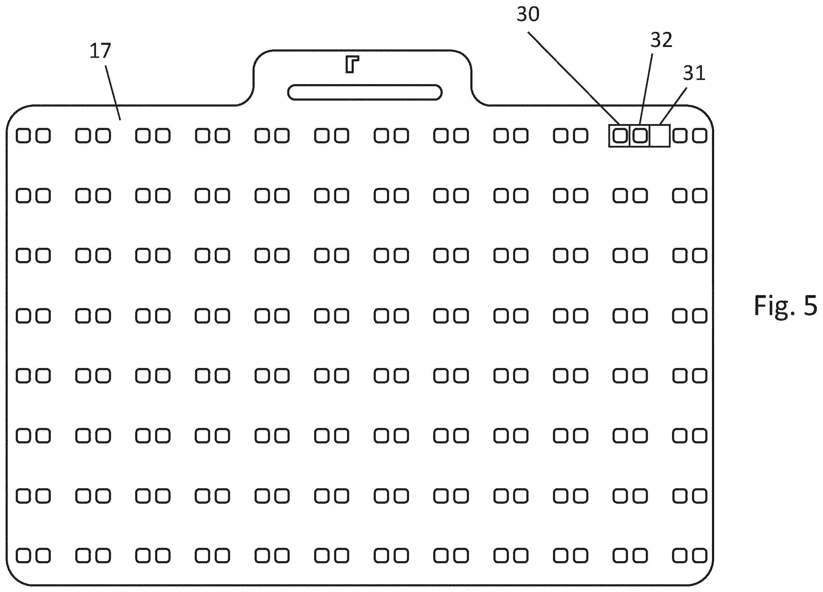

Fig. 5 zeigt eine etwas anders ausgestattete Shuttervorrichtung 17. Hier ist neben einem offenen Bereich 30 ein Graufilterbereich 32 vorgesehen und daneben ein geschlossener Bereich 31. Mit dieser Shuttervorrichtung kann sowohl ein offener Bereich zu einem Lumineszenzsensor ausgerichtet sein als auch der geschlossene Bereich 31 sowie ein Graufilterbereich 32.

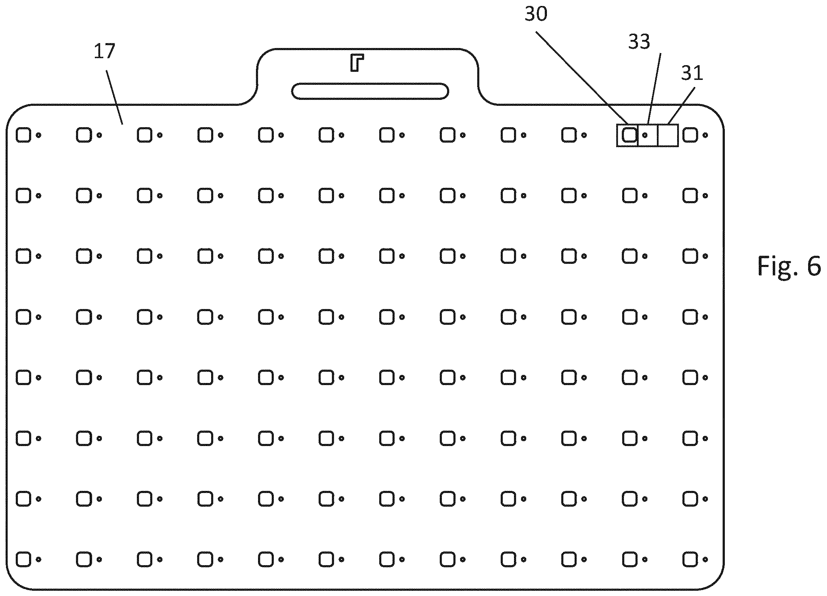

Fig. 6 zeigt noch eine andere Ausgestaltung einer Shuttervorrichtung 17, bei der anstelle eines Graufilterbereichs 32 ein teilweise offener Bereich 33 oder ein Bereich mit einem Muster vorgesehen ist. In diesem Fall ist die dargestellte Öffnung deutlich kleiner als die Öffnung im offenen Bereich 30, so dass deutlich weniger Licht auf den sich dahinter befindlichen Lumineszenzsensor gestrahlt wird.

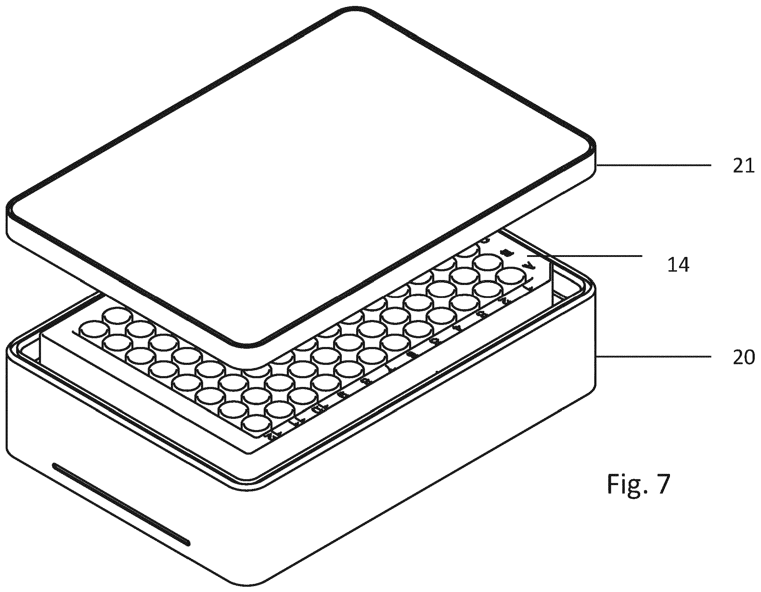

Fig. 7 zeigt in schematischer dreidimensionaler Darstellung ein erfindungsgemäßes Luminometer in einer Bottom-Up-Darstellung. Es ist in diesem Fall ein geschlossener Deckelkörper 20 vorgesehen, in das die Mikrotiterplatte 14 eingebracht wird. Anschließend wird der Bodenkörper 21 auf den Deckelkörper 20 aufgebracht oder aufgesetzt. In dem Deckelkörper 20 ist die Optik und die Sensorik eingebracht, so dass in dieser Ausgestaltung die Lumineszenz über den Boden der Mikrotiterplatte 14 gemessen werden kann. Hierzu ist die Mikrotiterplatte 14 im Bodenbereich für die Lumineszenzstrahlung transparent.

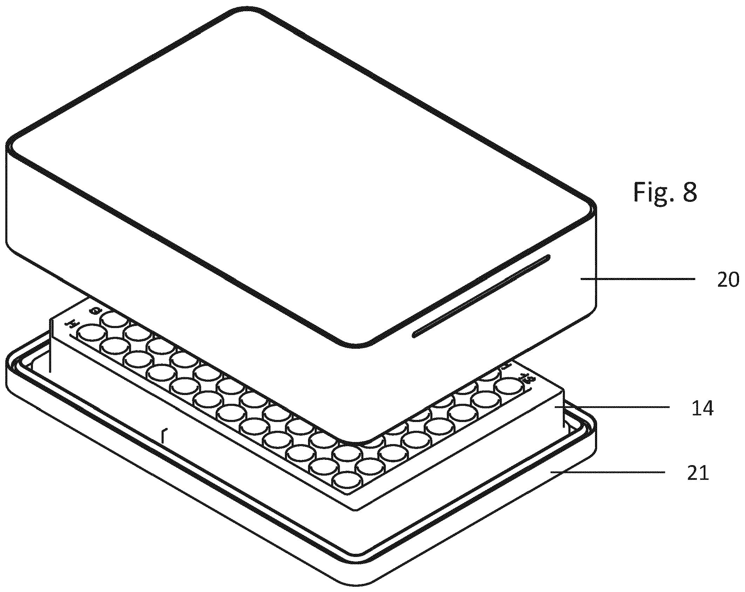

Fig. 8 zeigt schematisch in dreidimensionaler Darstellung eine Messmethode, die anders herum ist als in Fig. 7. Hier wird die Mikrotiterplatte 14 in den Bodenkörper 21 eingebracht und der Deckelkörper 20 von oben auf den Bodenkörper 21 aufgesetzt. In diesem Fall werden die Proben in den Kavitäten der Mikrotiterplatte 14 von oben, also durch die Öffnung der Kavitäten hindurch gemessen.

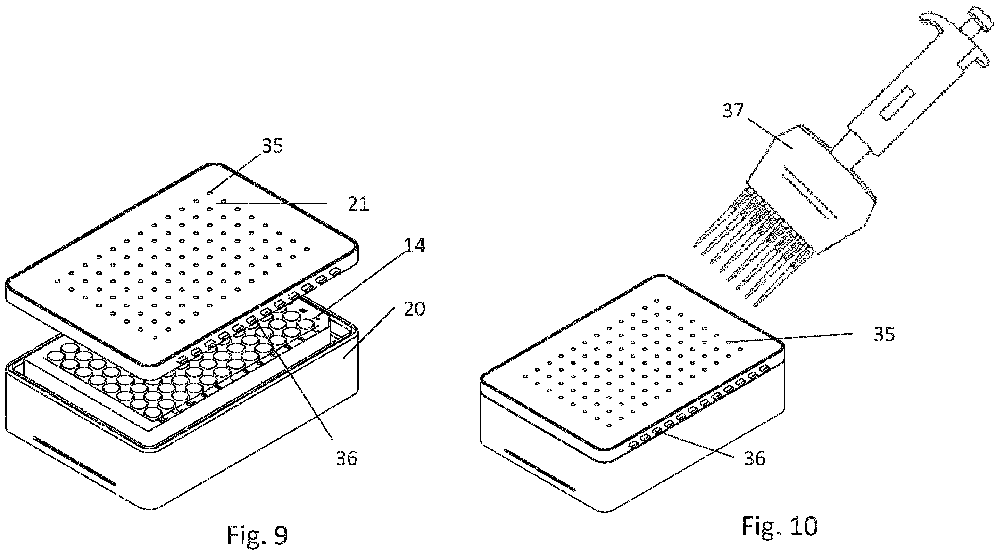

Fig. 9 zeigt schematisch in dreidimensionaler Darstellung eine etwas andere Ausgestaltung des erfindungsgemäßen Luminometers 10. Hier ist der Bodenkörper 21 mit in diesem Fall 96 Pipettierlöchern 35 versehen. An einer Längsseite des Bodenkörpers 21 sind Öffnungselemente 36 vorgesehen, mittels denen eine ganze Reihe von acht Pipettierlöchern 35 mit einer Aktion geöffnet werden können. Dieses Öffnen kann mechanisch sein oder elektromechanisch.

In Fig. 10 ist ein Luminometer 10 im geschlossenen Zustand schematisch dreidimensional dargestellt. Zudem ist eine Pipettiervorrichtung 37 dargestellt. Wenn auf das Öffnungselement 36 beispielsweise gedrückt wird, kann die dritte Reihe von Pipettierlöchern 35 mit der Pipettiervorrichtung 37 in Eingriff gebracht werden, so dass die Kavitäten der darunterliegenden Mikrotiterplatte 14 in einer Reihe alle auf einmal mit einem Material befüllt werden können.

Die vorliegende Erfindung ist in den beigefügten Ansprüchen definiert.

### Bezugszeichenliste

- 10: Luminometer
- 11: Hauptplatine
- 12: Abschirmung
- 13: Detektorvorrichtung
- 14: Mikrotiterplatte
- 15: Kavität
- 16: Linsenhalterung
- 17: Shuttervorrichtung
- 18: Rahmen
- 19: Lumineszenzsensorrahmen
- 20: Deckelkörper
- 21: Bodenkörper
- 22: Sammellinse
- 23: Lumineszenzsensor
- 24: Time-of-Flight-Sensor
- 25: Temperatursensor
- 26: elektrische Kontakte
- 30: offener Bereich
- 31: geschlossener Bereich
- 32: Graufilterbereich
- 33: teilweise offener Bereich
- 35: Pipettierloch
- 36: Öffnungselement
- 37: Pipettiervorrichtung
- 38: Öffnung

## Patentansprüche

1. Luminometer (10) zur Untersuchung von Proben in Kavitäten (15) einer Mikrotiterplatte (14) umfassend einen Zwischenraum zur Aufnahme der Mikrotiterplatte (14), wobei eine Detektorvorrichtung (13) vorgesehen ist, die eine Mehrzahl von Lumineszenzsensoren (23) aufweist, wobei jeder Kavität (15) der Mikrotiterplatte (14) ein Lumineszenzsensor (23) zugeordnet ist, wobei eine Shuttervorrichtung (17) vorgesehen ist, die benachbart zu der Detektorvorrichtung (13) angeordnet ist und für jeden Lumineszenzsensor (23) eine Öffnung (38) und eine Verdeckung aufweist, wobei die Öffnungen (38) der Shuttervorrichtung (17) in einer Ebene angeordnet sind, wobei die Shuttervorrichtung (17) in der Ebene der Shuttervorrichtung (17) translatorisch bewegbar ist.

2. Luminometer (10) nach Anspruch 1, **dadurch gekennzeichnet, dass** zu jedem Lumineszenzsensor (23) eine Sammellinse (22), insbesondere eine Kugellinse, vorgesehen ist, wobei der jeweilige Lumineszenzsensor (23) insbesondere in einem Fokus zu der zugehörigen Sammellinse (22) angeordnet ist, wobei insbesondere die jeweilige Sammellinse (22) im Strahlengang von einer Kavität (15) zu einem zugeordneten Lumineszenzsensor (23) angeordnet ist.

3. Luminometer (10) nach Anspruch 1 oder 2, **dadurch gekennzeichnet, dass** die Lumineszenzsensoren (23) der Detektorvorrichtung (13) in einer Ebene, insbesondere auf einer Platte, angeordnet sind.

4. Luminometer (10) nach einem der Ansprüche 1 bis 3, **dadurch gekennzeichnet, dass** die Öffnungen (38), und insbesondere die Verdeckungen, der Shuttervorrichtung (17) in der Ebene in oder auf einer Platte angeordnet sind, die insbesondere parallel zu der Ebene der Detektorvorrichtung (13) ist.

5. Luminometer (10) nach einem der Ansprüche 1 bis 4, **dadurch gekennzeichnet, dass** eine Auswerteelektronik vorgesehen ist, die ausgestaltet ist, die Messvorgänge von wenigstens zwei, insbesondere wenigstens vier, insbesondere wenigstens sechs, Lumineszenzsensoren (23) gleichzeitig und/oder parallel aufzunehmen und/oder auszuwerten, wobei insbesondere die Detektorvorrichtung (13) und die Mikrotiterplatte (14) zur Messung einer Mehrzahl der Proben, insbesondere aller Proben, in den Kavitäten (15) ortsfest sind.

6. Luminometer (10) nach einem der Ansprüche 1 bis 5, **dadurch gekennzeichnet, dass** der Zwischenraum im Wesentlichen formkomplementär zu der in den Zwischenraum einbringbaren oder aufgenommenen Mikrotiterplatte (14) ist.

7. Luminometer (10) nach einem der Ansprüche 1 bis 6, **dadurch gekennzeichnet, dass** dieses einen Deckelkörper (20) und einen Bodenkörper (21) aufweist, die formschlüssig zueinander sind, wobei insbesondere im Deckelkörper (20) die Detektorvorrichtung (13) angeordnet ist.

8. Luminometer (10) nach einem der Ansprüche 1 bis 7, **dadurch gekennzeichnet, dass** ein Sensor, insbesondere ein Beschleunigungssensor und/oder ein Lagesensor, vorgesehen ist, der ausgebildet ist, eine Lagepositionierung des Luminometers (10) zu erfassen.

9. Luminometer (10) nach Anspruch 7 oder 8, **dadurch gekennzeichnet, dass** insbesondere verschließbare Öffnungen im Bodenkörper (21) angeordnet sind, die eine Befüllung der Kavitäten (15) der Mikrotiterplatte (14) in dem Luminometer (10) ermöglichen.

10. Luminometer (10) nach einem der Ansprüche 1 bis 9, **dadurch gekennzeichnet, dass** ein Sensor, insbesondere ein Time-of-Flight-Sensor (24), vorgesehen ist, mittels dessen überprüfbar ist, ob eine Mikrotiterplatte (14) in dem Zwischenraum eingebracht ist und/oder ob der Deckelkörper (20) auf dem Bodenkörper (21) aufgesetzt ist.

11. Verfahren zum Untersuchen von Proben in Kavitäten (15) in einer Mikrotiterplatte (14) mittels Lumineszenzmessungen, wobei die Mikrotiterplatte (14) in einem Zwischenraum zwischen einem Bodenkörper (21) und einem Deckelkörper (20) eines Luminometers (10) angeordnet ist oder wird und im Deckelkörper (20) eine Mehrzahl von Lumineszenzsensoren (23) einer Detektorvorrichtung (13) angeordnet sind, wobei jeder Kavität (15) der Mikrotiterplatte (14) wenigstens ein Lumineszenzsensor (23) zugeordnet ist und Lumineszenzlicht aus der jeweiligen Kavität (15) mit dem jeweiligen zugeordneten Lumineszenzsensor (23) gemessen wird, wobei eine Shuttervorrichtung (17) vorgesehen ist, mittels der das Lumineszenzlicht aus jeder Kavität (15) gleichzeitig bei der Messung durch den Lumineszenzsensor (23), der der jeweiligen Kavität (15) zugeordnet ist, durchgelassen, geblockt oder gefiltert wird, wobei die Shuttervorrichtung (17) benachbart zu der Detektorvorrichtung (13) angeordnet ist und für jeden Lumineszenzsensor (23) eine Öffnung (38) und eine Verdeckung aufweist, wobei die Öffnungen (38) der Shuttervorrichtung (17) in einer Ebene angeordnet sind, wobei die Shuttervorrichtung (17) in der Ebene der Shuttervorrichtung translatorisch bewegt wird.

12. Verfahren nach Anspruch 11, **dadurch gekennzeichnet, dass** das Lumineszenzlicht zunächst durch jeweils eine Sammellinse (22), insbesondere Kugellinse, auf jeweils einen Lumineszenzsensor (23) fokussiert wird, wobei insbesondere zur Korrektur der Messergebnisse eine Dunkelzählrate, insbesondere mehrmals während der Messung, bestimmt wird.

13. Verfahren nach Anspruch 11 oder 12, **dadurch gekennzeichnet, dass** je nach Intensität des Lumineszenzlichts der Probe verschiedene Messmethoden verwendet werden, insbesondere eine Geigermodusmessmethode, eine Integrationsmodusmessmethode, eine Integrationsmodusmessmethode mit teilweiser Abdeckung der Kavität (15) oder eine Integrationsmodusmessmethode mit einem Graufilter und/oder eine Kombination der Messmethoden, wobei insbesondere eine Bottom-Up-Konfiguration ermöglicht ist, um eine Lumineszenzmessung durch den Boden der Kavitäten (15) durchzuführen, wobei insbesondere eine Flashmessung, eine Endpunktmessung oder eine kinetische Messung durchgeführt wird.

14. Verfahren nach einem der Ansprüche 11 bis 13, **dadurch gekennzeichnet, dass** die Messungen an allen Proben in den Kavitäten (15) der Mikrotiterplatte (14) ohne ein Bewegen der Mikrotiterplatte (14) und der Detektorvorrichtung (13) zwischen der ersten und der letzten Messung durchgeführt werden, wobei insbesondere die Messung wenigstens teilweise gleichzeitig und/oder parallel durchgeführt werden.

## Claims

1. A luminometer (10) for examining samples in cavities (15) of a microtiter plate (14), comprising an intermediate space for receiving the microtiter plate (14),
wherein a detector device (13) is provided which has a plurality of luminescence sensors (23), wherein one luminescence sensor (23) is assigned to each cavity (15) of the microtiter plate (14),
wherein a shutter device (17) is provided which is arranged adjacent to the detector device (13) and has an opening (38) and a cover for each luminescence sensor (23), wherein the openings (38) of the shutter device (17) are arranged in a plane, wherein the shutter device (17) can be translationally moved in the plane of the shutter device (17).

2. The luminometer (10) according to Claim 1, **characterized in that** a converging lens (22), in particular a spherical lens, is provided for each luminescence sensor (23), wherein the respective luminescence sensor (23) is in particular arranged in a focus to the associated converging lens (22), wherein in particular the respective converging lens (22) is arranged in the beam path from a cavity (15) to an assigned luminescence sensor (23).

3. The luminometer (10) according to Claim 1 or 2, **characterized in that** the luminescence sensors (23) of the detector device (13) are arranged in a plane, in particular on a plate.

4. The luminometer (10) according to any one of Claims 1 to 3, **characterized in that** the openings (38), and in particular the covers, of the shutter device (17) are arranged in the plane in or on a plate which is in particular parallel to the plane of the detector device (13).

5. The luminometer (10) according to any one of Claims 1 to 4, **characterized in that** evaluation electronics are provided which are designed to receive and/or to evaluate the measuring processes of at least two, in particular at least four, in particular at least six, luminescence sensors (23) simultaneously and/or in parallel, wherein in particular the detector device (13) and the microtiter plate (14) for measuring a plurality of the samples, in particular all of the samples, are stationary in the cavities (15).

6. The luminometer (10) according to any one of Claims 1 to 5, **characterized in that** the intermediate space is substantially complementary in shape to the microtiter plate (14) which can be introduced into or received in the intermediate space.

7. The luminometer (10) according to any one of Claims 1 to 6, **characterized in that** it has a cover body (20) and a base body (21) which have a form-fit with one another, wherein the detector device (13) is arranged in particular in the cover body (20).

8. The luminometer (10) according to any one of Claims 1 to 7, **characterized in that** a sensor, in particular an acceleration sensor and/or a position sensor, is provided which is configured to capture a positioning of the luminometer (10).

9. The luminometer (10) according to Claim 7 or 8, **characterized in that** closable openings in particular are arranged in the base body (21) which make it possible to fill the cavities (15) of the microtiter plate (14) in the luminometer (10).

10. The luminometer (10) according to any one of Claims 1 to 9, **characterized in that** a sensor, in particular a time-of-flight sensor (24), is provided, by means of which it can be checked whether a microtiter plate (14) is introduced in the intermediate space and/or whether the cover body (20) is placed on the base body (21).

11. A method for examining samples in cavities (15) in a microtiter plate (14) by means of luminescence measurements, wherein the microtiter plate (14) is or will be arranged in an intermediate space between a base body (21) and a cover body (20) of a luminometer (10) and a plurality of luminescence sensors (23) of a detector device (13) are arranged in the cover body (20), wherein at least one luminescence sensor (23) is assigned to each cavity (15) of the microtiter plate (14) and luminescence light from the respective cavity (15) is measured with the respective assigned luminescence sensor (23), wherein a shutter device (17) is provided, by means of which the luminescence light from each cavity (15) is simultaneously allowed through, blocked or filtered during the measurement by the luminescence sensor (23) which is assigned to the respective cavity (15), wherein the shutter device (17) is arranged adjacent to the detector device (13) and has an opening (38) and a cover for each luminescence sensor (23), wherein the openings (38) of the shutter device (17) are arranged in a plane, wherein the shutter device (17) is translationally moved in the plane of the shutter device.

12. The method according to Claim 11, **characterized in that** the luminescence light is initially focused by a converging lens (22) in each case, in particular a spherical lens, onto one luminescence sensor (23) in each case, wherein a dark count rate is determined, in particular several times during the measurement, in particular to correct the measurement results.

13. The method according to Claim 11 or 12, **characterized in that** depending on the intensity of the luminescence light of the sample, various measuring methods are used, in particular a Geiger mode measuring method, an integration mode measuring method, an integration mode measuring method with partial coverage of the cavity (15) or an integration mode measuring method with a gray filter and/or a combination of the measuring methods, wherein in particular a bottom-up configuration is made possible in order to perform a luminescence measurement through the bottom of the cavities (15), wherein in particular a flash measurement, an endpoint measurement or a kinetic measurement is performed.

14. The method according to any one of Claims 11 to 13, **characterized in that** the measurements are performed on all of the samples in the cavities (15) of the microtiter plate (14) without moving the microtiter plate (14) and the detector device (13) between the first and the last measurement, wherein in particular the measurement are performed at least partially simultaneously and/or in parallel.

## Revendications

1. Luminomètre (10) destiné à l'analyse d'échantillons dans les cavités (15) d'une plaque de microtitrage (14), comprenant un espace intermédiaire destiné à recevoir la plaque de microtitrage (14), un dispositif de détection (13) étant prévu, présentant une pluralité de capteurs de luminescence (23), un capteur de luminescence (23) étant associé à chaque cavité (15) de la plaque de microtitrage (14), un dispositif d'obturation (17) étant prévu, agencé à proximité du dispositif de détection (13) et présentant, pour chaque capteur de luminescence (23), une ouverture (38) et un élément de recouvrement, les ouvertures (38) du dispositif d'obturation (17) étant agencées dans un même plan, le dispositif d'obturation (17) étant mobile en translation dans le plan du dispositif d'obturation (17).

2. Luminomètre (10) selon la revendication 1, **caractérisé en ce qu'**une lentille convergente (22), en particulier une lentille sphérique, est prévue pour chaque capteur de luminescence (23), le capteur de luminescence (23) respectif étant notamment agencé au niveau du foyer de la lentille convergente (22) associée, et la lentille convergente (22) respective étant notamment agencée sur le trajet optique entre une cavité (15) et un capteur de luminescence (23) associé.

3. Luminomètre (10) selon la revendication 1 ou la revendication 2, **caractérisé en ce que** les capteurs de luminescence (23) du dispositif de détection (13) sont agencés dans un même plan, en particulier sur une plaque.

4. Luminomètre (10) selon l'une des revendications 1 à 3, **caractérisé en ce que** les ouvertures (38), et en particulier les éléments de recouvrement, du dispositif d'obturation (17) sont agencés dans le plan à l'intérieur d'une plaque ou sur celle-ci, qui est notamment parallèle au plan du dispositif de détection (13).

5. Luminomètre (10) selon l'une des revendications 1 à 4, **caractérisé en ce qu'**il est prévu un circuit électronique d'évaluation qui est conçu pour enregistrer et/ou analyser simultanément et/ou en parallèle les processus de mesure d'au moins deux, en particulier d'au moins quatre, en particulier d'au moins six, capteurs de luminescence (23), le dispositif de détection (13) et la plaque de microtitrage (14) étant notamment fixes pour la mesure d'une pluralité d'échantillons, en particulier de tous les échantillons, contenus dans les cavités (15)..

6. Luminomètre (10) selon l'une des revendications 1 à 5, **caractérisé en ce que** l'espace intermédiaire présente une forme essentiellement complémentaire à celle de la plaque de microtitrage (14) susceptible d'être insérée dans cet espace intermédiaire ou d'être logée à l'intérieur de celui-ci.

7. Luminomètre (10) selon l'une des revendications 1 à 6, **caractérisé en ce qu'**il présente un corps de couvercle (20) et un corps de base (21) qui sont de formes complémentaires l'une par rapport à l'autre, le dispositif de détection (13) étant notamment agencé dans le corps de couvercle (20).

8. Luminomètre (10) selon l'une des revendications 1 à 7, **caractérisé en ce qu'**il est prévu un capteur, en particulier un capteur d'accélération et/ou un capteur de position, qui est conçu pour détecter la position du luminomètre (10).

9. Luminomètre (10) selon la revendication 7 ou la revendication 8, **caractérisé en ce que** des ouvertures, notamment aptes à être obturées, sont aménagées dans le corps de base (21), lesquelles permettent le remplissage des cavités (15) de la plaque de microtitrage (14) alors que celle-ci se trouve à l'intérieur du luminomètre (10).

10. Luminomètre (10) selon l'une des revendications 1 à 9, **caractérisé en ce qu'**il est prévu un capteur, en particulier un capteur à temps de vol (24), au moyen duquel il est possible de vérifier si une plaque de microtitrage (14) est placée dans l'espace intermédiaire et/ou si le corps de couvercle (20) est placé sur le corps de base (21).

11. Procédé d'analyse d'échantillons dans les cavités (15) d'une plaque de microtitrage (14) au moyen de mesures de luminescence, la plaque de microtitrage (14) étant agencée dans un espace intermédiaire entre un corps de base (21) et un corps de couvercle (20) d'un luminomètre (10), et une pluralité de capteurs de luminescence (23) d'un dispositif de détection (13) sont agencés dans le corps de couvercle (20), au moins un capteur de luminescence (23) étant associé à chaque cavité (15) de la plaque de microtitrage (14) et la lumière de luminescence provenant de la cavité (15) concernée étant mesurée par le capteur de luminescence associé (23) ; un dispositif d'obturation (17) étant prévu, au moyen duquel la lumière luminescente provenant de chaque cavité (15) est simultanément transmise, bloquée ou filtrée lors de la mesure par le capteur de luminescence (23) associé à la cavité (15) correspondante, le dispositif d'obturation (17) étant agencé à proximité du dispositif de détection (13) et présentant, pour chaque capteur de luminescence (23), une ouverture (38) et un élément de recouvrement, les ouvertures (38) du dispositif d'obturation (17) étant agencées dans un même plan, le dispositif d'obturation (17) étant déplacé en translation dans le plan du dispositif d'obturation.

12. Procédé selon la revendication 11, **caractérisé en ce que** la lumière luminescente est d'abord focalisée par une lentille convergente (22), en particulier une lentille sphérique, sur un capteur de luminescence (23) respectif, un taux de comptage dans l'obscurité étant déterminé, notamment à plusieurs reprises au cours de la mesure, en particulier pour corriger les résultats de mesure.

13. Procédé selon la revendication 11 ou la revendication 12, **caractérisé en ce que**, en fonction de l'intensité de la lumière luminescente de l'échantillon, différentes méthodes de mesure sont utilisées, notamment une méthode de mesure en mode Geiger, une méthode de mesure en mode d'intégration, une méthode de mesure en mode d'intégration avec recouvrement partiel de la cavité (15) ou une méthode de mesure en mode d'intégration avec un filtre gris et/ou une combinaison de ces méthodes de mesure, une configuration ascendante, « bottom-up », étant notamment possible pour effectuer une mesure de luminescence à travers le fond des cavités (15), une mesure flash, une mesure au point final ou une mesure cinétique étant notamment réalisée.

14. Procédé selon l'une des revendications 11 à 13, **caractérisé en ce que** les mesures sur tous les échantillons dans les cavités (15) de la plaque de microtitrage (14) sont effectuées sans déplacement de la plaque de microtitrage (14) ni du dispositif de détection (13) entre la première et la dernière mesure, les mesures étant notamment effectuées au moins en partie simultanément et/ou en parallèle.
